# EUROPÄISCHE PATENTSCHRIFT

(11) **EP 1 121 784 B1**
(45) Veröffentlichungstag und Bekanntmachung des Hinweises auf die Patenterteilung: **26.02.2003**
(21) Anmeldenummer: 99952551.2
(22) Anmeldetag: 12.10.1999
(51) Int. Cl.: H04L 12/28, H04M 1/725, H04Q 7/32

(54) **BASISSTATION FÜR EIN NAHBEREICHSFUNKSYSTEM SOWIE DATENKOMMUNIKATIONSSYSTEM**
BASE STATION FOR A SHORT RANGE RADIO SYSTEM AND DATA COMMUNICATION SYSTEM
STATION DE BASE POUR UN SYSTEME RADIO POUR COURTES DISTANCES, ET SYSTEME DE COMMUNICATION DE DONNEES

(30) Priorität: 12.10.1998 DE 19846952
(43) Veröffentlichungstag der Anmeldung: 08.08.2001
(73) Patentinhaber: Dosch & Amand FreeHome GmbH & Co. KG, 81679 München (DE)
(72) Erfinder: DOSCH, Franz, A., D-83026 Rosenheim (DE)
(74) Vertreter: Grünecker, Kinkeldey, Stockmair & Schwanhäusser Anwaltssozietät
(86) Internationale Anmeldenummer: EP9907635
(87) Internationale Veröffentlichungsnummer: WO00022782

(56) Entgegenhaltungen:
- EP-A- 0 849 965
- WO-A-98/11760
- DE-U- 29 714 588

## Beschreibung

Die vorliegende Erfindung betrifft eine Basisstation für ein Nahbereichsfunksystem sowie ein Datenkommunikationssystem und betrifft insbesondere eine Basisstation für den DECT-Standard.

Mobilfunksysteme, wie beispielsweise das GSM-System oder zukünftige satellitengestützte Systeme, ermöglichen entsprechenden Benutzern nahezu unbegrenzte Möglichkeiten zur mobilen Sprachkommunikation. Zunehmend an Bedeutung gewinnt in diesen Systemen auch die Datenkommunikation, wofür das Mobilfunkendgerät üblicherweise über ein Kabel mit dem entsprechenden Datenverarbeitungsgerät verbunden ist, das wiederum mit der für die Datenkommunikation notwendigen Hard- und Software ausgestattet ist.

Im privaten Bereich und Büros finden darüber hinaus schnurlose Telefonsysteme zunehmend Verbreitung, die sich im Gegensatz zu den oben angesprochenen globalen Systemen als lokale Mobilfunkdienste einordnen lassen. Beispiele für derartige Systeme sind DECT (Digital Enhanced Cordless Telecommunication), PHS (Personal Handy System), PWT (Personal Wireless Telecommunication),CT-1, CT-2 (Cordless Telefon) etc..

Um den Benutzern den Umgang mit den angesprochenen Systemen zu erleichtem, wurden sogenannte Dual-Mode-Geräte entwickelt, die sich wahlweise sowohl in einem lokalen Mobilfunkdienst, d.h. insbesondere zum schnurlosen Telefonieren im privaten Bereich als auch für globale Mobilfunkdienste, wie beispielsweise das GSM-System eignen.

Eine Lösung zur verbesserten kombinierten Nutzung bestehender lokaler und globaler Mobilfunkdienste ist von der vorliegenden Anmelderin in der am 4. August 1997 eingereichten europäischen Patentanmeldung 97 11 3393.9 beschrieben.

Das darin vorgeschlagene Mobilfunkgerät ermöglicht in eleganter Weise drahtlose Datenkommunikationen von einer Computereinrichtung über ein globales Mobilfunksystem, wie beispielsweise das GSM-System, wobei die Computereinrichtung keine spezielle Anpassung an den GSM-Standard benötigt, sondern eine Datenkommunikation im für Büroanwendungen bereits verbreiteten DECT-Standard durchführen kann.

Die in der genannten Patentanmeldung beschriebene Lösung bietet wirtschaftliche Vorteile, da die Computereinrichtung sowohl für lokale Kommuniktion als auch für globale Kommunikation nur mit einem einzigen Funkmodul, nämlich dem für lokale Kommunikation ausgestattet sein muß. Dieser Vorteil wird andererseits nur dadurch möglich, indem ein Mobilfunkgerät gemäß dem GSM-Standard so umgerüstet wird, daß es eine Umsetzung vom DECT-Standard in den GSM-Standard ermöglicht.

Weitere Lösungsmöglichkeiten zur Unterstützung drahtloser Datenkommunikation für Computereinrichtungen bestehen in der Bereitstellung eines intemen oder externen Funkmoduls für die Computereinrichtung, das über einen Nahbereichsfunkstandard wie DECT an ein Festnetz angekoppelt ist sowie in der Anbindung der Computereinrichtung über ein Kabel an eine serielle Datenschnittstelle eines Mobilfunkgeräts, beispielsweise eines GSM-Mobilfunkgeräts.

EP 0 849 965 A1 beschreibt eine Dual Mode Basisstation bzw. Telefon-Zwillingsstation, die ermöglicht, über ein DECT-Endgerät sowohl Gespräche über ein Festnetz-Telekommunikationsnetz als auch über ein Mobilfunknetz zu führen. Hierzu wird eine Basisstation vorgeschlagen, die zum einen die Aufgaben einer herkömmlichen DECT-Basisstation übernehmen kann und zum anderen einen System-Connector 19 enthält, an den ein GSM-Mobilfunkendgerät angeschlossen werden kann. Wie in Spalte 7, Zeilen 13 bis 16 beschrieben, wird die Basisstation dadurch in die Lage versetzt, Mobilfunk-Signale zu empfangen und diese in DECT-Signale umzusetzen. Die umgesetzten Signale werden dann über eine Antenne abgestrahlt und können vom DECT-Endgerät in üblicher Weise empfangen werden. In entsprechender Weise ist die Basisstation in der Lage, empfangene DECT-Signale in Mobilfunk-Signale umzusetzen und diese über das angeschlossene Mobilfunk-Endgerät abzustrahlen.

Gemäß Spalte 5, Zeilen 4 bis 6, ist für die erwähnte Umsetzung ein noch nicht existierender Umsetzer erforderlich.

Hinsichtlich des System-Connectors 19, über den ein Anschluss eines Mobilfunk-Endgerätes ermöglicht wird, wird in Spalte 7, Zeilen 50 bis 57, ausgeführt, dass dieser zwei Leitungen für die Übermittlung eines analogen Sprachsignals sowie einen Systembus für den gesamten im Mobilfunk anfallenden Signalisierungsverkehr aufweist. Die Basisstation weist darüber hinaus eine Steuerungslogik auf, die das System überwacht und die dazu dient, als Übersetzer bei der Umsetzung sowohl der Sprachcodierungsdaten als auch der Signalisierungsdaten der Schnurlos-, Mobilfunk- und Festnetzkomponenten zu dienen (vgl. Spalte 8, Zeilen 3 bis 9).

WO 98/11760 zeigt anhand der dortigen Fig. 4 eine "Multi-Mode-Telekommunikationseinrichtung, die eine Aufnahme 18 zum Einsetzen eines GSM-Mobilfunkgeräts 26 und einen weiteren Aufnahmebereich 20 zur Aufnahme eines DECT-Mobilfunkgeräts aufweist. Ein eingehender Anruf über das GSM-Gerät wird von der Multi-Mode-Telekommunikationseinrichtung 30 an das GSM-Gerät 26 weitergeleitet, auch wenn das DECT-Endgerät 26 nicht in die Einheit 30 eingesetzt ist, sondern von einem Benutzer mitgeführt wird. Die Druckschrift beschreibt somit eine Umsetzereinrichtung, die ähnlich zu der aus EP 0 849 965 A1 bekannten Umsetzereinrichtung ist, d.h. eine Einrichtung, bei der Sprachkommunikation einschließlich der Signalisierungsdaten vom GSM-Format in das DECT-Format umgesetzt wird.

Ausgehend von den genannten bekannten Prinzipien ist es die Augabe der vorliegenden Erfindung, eine Basisstation sowie ein Datenkommunikationssystem anzugeben, mit denen eine kosteneffiziente sowie flexible drahtlose Datenkommunikation mit Computereinrichtungen ermöglicht wird.

Diese Aufgabe wird duch ein Datenkommunikationssystem nach Anspruch 1, eine Basisstation nach Anspruch 10 und einen Aktenkoffer nach Anspruch 11 gelöst.

Insbesondere wird die Aufgabe gelöst durch eine Basisstation für ein Nahbereichsfunksystem gemäß einem ersten Standard, insbesondere zum Aufbau einer Funkzelle im DECT-Standard, wobei die Basisstation Einrichtungen aufweist, die eine drahtlose Datenkommunikation mit einer Computereinrichtung über den ersten Funkstandard, insbesondere DECT-Standard ermöglichen, wobei die Basisstation einen Aufnahmebereich zum Einsetz eines Standard-Mobilfunkgeräts eines anderen, zweiten Funkstandards, insbesondere des GSM-Standards aufweist, wobei in dem Aufnahmebereich eine elektrische Datenschnittstelle angeordnet ist, die im eingesetzten Zustand des Mobilfunkgerätes mit einer entsprechenden Datenschnittstelle des Mobilfunkgeräts gekoppelt ist. die Basisstation eine Umsetzeinrichtung aufweist zum Umsetzen empfangener Funksignale gemäß dem ersten Standard in ein Datenformat, für das die elektrische Datenschnittstelle des Mobilfunkgeräts ausgelegt ist, zum Übertragen der umgesetzten Daten an das Mobilfunkgerät über die Datenschnittstelle sowie zum Umsetzen von über die Datenschnittstelle vom Mobilfunkgerät empfangenen Daten in den ersten Funkstandard, zur Übertragung an die Computereinrichtung.

Zum anderen wird die Aufgabe gelöst durch ein Datenkommunikationssystem enthaltend die genannte Basisstation sowie zusätzlich ein Mobilfunkgerät entsprechend dem zweiten Funkstandard sowie einer Computereinrichtung, vorzugsweise Laptopeinrichtung mit einem Funkmodul zur drahtlosen Ankoppelung der Computereinrichtung an die Basisstation gemäß dem ersten Funkstandard.

Bevorzugte Ausführungen der vorliegenden Erfindung sind Gegenstand der Unteransprüche.

Ein wesentlicher Vorteil der erfindungsgemäßen Basisstation besteht in der Möglichkeit, eine Computereinrichtung, die zur drahtlosen Kommunikation im DECT-Standard ausgelegt ist, über ein Standard-Mobilfunkgerät an den GSM-Standard anzukoppeln. Die Ankoppelung gelingt dabei nicht nur innerhalb von Räumlichkeiten mit DECT-Infrastruktur, sondern an beliebigen Orten, da die erfindungsgemäße Basisstation selbst eine DECT-Funkzelle für die Kommunikation mit der Computereinrichtung zur Verfügung stellt. Die Computereinrichtung, die vorzugsweise über eine eingesteckte PCMCIA-Karte mit Antenne an die DECT-Umgebung angekoppelt ist, muß für die Ankoppelung an das GSM-Netz nicht weiter angepaßt werden. Der Benutzer der Computereinrichtung kann somit mit einem einzigen Funkmodul, vorzugsweise der erwähnten PCMCIA-Karte, eine breitbandige und qualitativ hochwertige Datenkommunikationen im DECT-Netz durchführen und kann ohne zusätzliche Maßnahmen mit derselben Karte und außerhalb von DECT-Zellen über die erfindungsgemäße Basisstation eine kabellose Verbindung zur erfindungsgemäßen Basisstation herstellen, in der dann die Umsetzung in den GSM-Standard erfolgt.

Wie angegeben, kann für die Ankoppelung an das GSM-Netz ein handelsübliches GSM-Mobilfunkgerät verwendet werden, wobei die Computereinrichtung, vorzugsweise Laptopeinrichtung, als komfortables Bedieninterface für das GSM-Mobiltelefon verwendet werden kann. Somit kann der Komfort selbst von preisgünstigen Mobilfunkgeräten drastisch erhöht werden.

Vorzugsweise dient die erfindungsgemäße Basisstation zugleich als Ladestation für das Mobilfunkgerät. Der Benutzer muß auf Reisen somit kein zusätzliches Gerät mitführen, sondern führt lediglich eine entsprechend erweitererte Ladestation mit sich.

Bevorzugterweise ist die erfindungsgemäße Basisstation darüber hinaus so ausgelegt, daß sie als normale Basisstation betrieben werden kann und insbesondere eine Ankoppelung an das Festnetz kabelgebunden oder drahtlos erlaubt.

Bevorzugte Ausführungsformen der folgenden Erfindung werden im folgenden unter Bezugnahme auf die beileigenden Zeichnungen näher erläutert. Dabei zeigen die Zeichnungen im einzelnen:
- Fig. 1: eine schematische Darstellung einer Ausführungsform der erfindungsgemäßen Basisstation;
- Fig. 2: die Basisstation gemäß Fig. 1 mit eingesetztem Mobilfunkgerät und
- Fig. 3: eine schematische Darstellung einer Ausführungsform des erfindungsgemäßen Datenkommunikationssystems enthalten eine Basisstation sowie ein Mobilfunkgerät gemäß Figur 2.

Die folgende Beschreibung bevorzugter Ausführungsformen der Erfindung legt als Nahbereichsfunkstandard den DECT-Standard zugrunde und als zweiten Standard den GSM-Standard. Diese Auswahl ist bevorzugt, jedoch ist die vorliegende Erfindung nicht auf die Verwendung dieser Standards beschränkt. Für den Nahbereichsfunkstandard kann jedes andere Short-Range-Funksystem/Nahbereichsfunksystem verwendet werden, z.B. PHS, Bluetooth, 2.4 GHz-Technik etc.. Statt des GSM-Standards als zweiten Standard können andere Funkstandards verwendet werden wie z.B. CDMA, PCN, spezielle Standards für Satelliten etc..

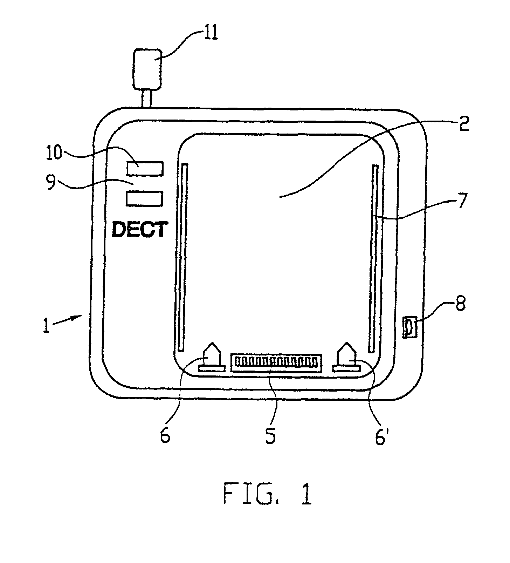

Figur 1 zeigt in schematischer Darstellung eine bevorzugte Ausführungsform der erfindungsgemäßen Basisstation 1. Die Basisstation dient zur Bereitstellung einer Funkkommuniktion gemäß dem DECT-Standard mit einer Computereinrichtung, vorzugsweise Laptopeinrichtung. Entsprechend weist die Computereinrichtung ein Funkmodul auf, das eine Anbindung der Computereinrichtung an den DECT-Standard ermöglicht.

Die Basisstation 1 weist einen Aufnahmebereich 2 auf, der vorzugsweise schalenförmig ausgestaltet ist, um darin ein Mobilfunkgerät abzulegen oder einzusetzen.

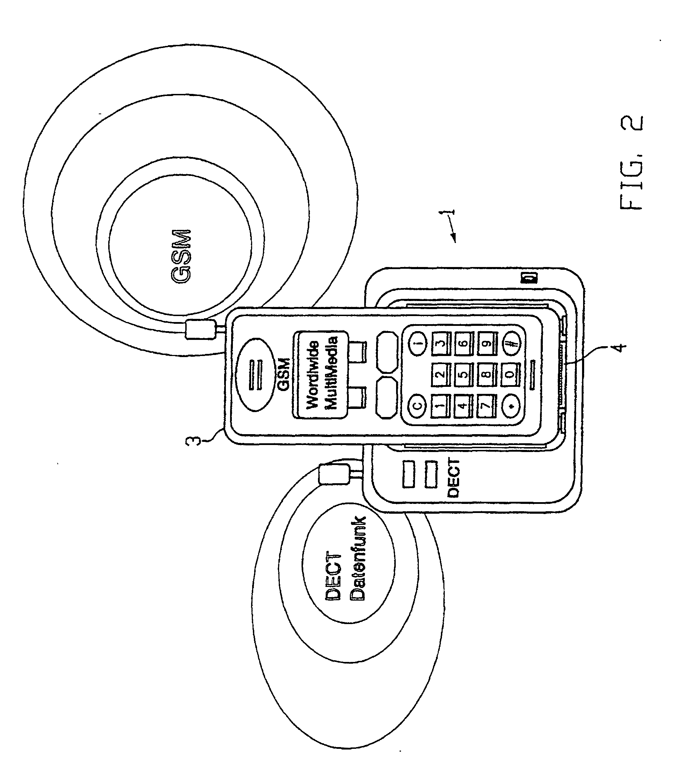

Figur 2 zeigt die Basisstation 1 mit eingesetztem Mobilfunkgerät 3. Beispielhaft ist das Mobilfunkgerät als GSM-Handy ausgelegt und stellt ein handelsübliches GSM-Endgerät ohne spezielle Anpassung dar. Das Mobilfunkgerät weist an seiner Unterseite eine Datenschnittstelle 4 auf, die zur seriellen Datenein- und ausgabe dient. Die Datenschnittstelle 4 des Mobilfunkgeräts ist als Steckerbuchse ausgeführt und korrespondiert mit einem Stecker 5 in der Basisstation 1. Somit wird beim Einsetzen des Mobilfunkgeräts 3 in die Basisstation 1 automatisch eine Koppelung der Datenschnittstelle des Mobilfunkgeräts mit der Datenschnittstelle der Basisstation über die Buchsen/Steckerkombination 4, 5 erreicht.

Die Basisstation 1 ist vorzugsweise zugleich als Ladestation für das Mobilfunkgerät 3 ausgeführt und besitzt daher entsprechende Ladeanschlüsse bzw. Ladekontakte 6, 6'. Diese Ladeanschlüsse können federgelagert sein und kommen beim Einsetzen des Mobilfunkgeräts 3 in die Ladeschale mit entsprechenden Ladekontakten des Mobilfunkgeräts in Kontakt, so daß eine automatische Aufladung erfolgen kann.

Für eine sichere Arretierung des Mobilfunkgeräts 3 in der Basisstation 1 besitzt diese vorzugsweise Einrastspangen 7.

Optional besitzt die Basisstation weiterhin einen Netzanschluß 8, insbesondere wenn die Basisstation zugleich als Ladestation ausgeführt ist.

Weiterhin besitzt die Basisstation vorzugsweise eine Betriebsanzeige 9 zum Anzeigen eines aktiven Sende- und Empfangszustandes sowie eine Anzeige 10 zum Anzeigen eines aktiven Ladevorgangs.

Die Basisstation 1 weist im Inneren ein Sende/Empfangsmodul auf, das eine Datenkommunikation im DECT-Standard über die Antenne 11 mit einer Computereinrichtung ermöglicht.

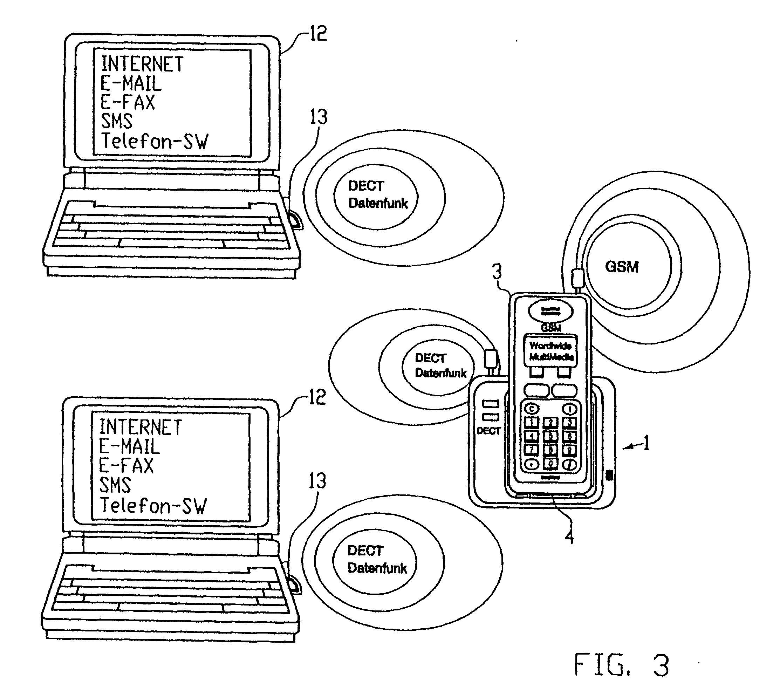

Figur 3 zeigt in schematischer Weise die Anbindung von Computereinrichtungen 12, vorzugsweise Notebooks über den DECT-Standard mit der erfindungsgemäßen Basisstation 1. Vorzugsweise ist das für die Computereinrichtungen 12 notwendige Funkmodul als PCMCIA-Karte ausgelegt, die in einen seitlichen Schlitz der entsprechenden Computereinrichtung eingesteckt wird. Bei den in Figur 3 dargestellten Computereinrichtungen 12 ist die PCMCIA-Karte bereits eingesetzt und es ist lediglich eine Antenne 13 der PCMCIA-Karte, die aus der Computereinrichtung während des Betriebs heraussteht, sichtbar.

Die Computereinrichtung kann jedoch auch über jedes andere geeignete PC-Funkmodul (USB, ISA, PCI), das mit dem Standard der Basisstation korrespondiert, ausgerüstet sein.

Der Betrieb des in Figur 3 schematisch dargestellten Datenkommunikationssystems läuft wie folgt ab. Die Computereinrichtungen 12 stehen über ihre Funkmodule, die vorzugsweise im DECT-Standard ausgeführt sind, mit der Basisstation 1 in Funkkontakt.

Die Basisstation 1 besitzt Einrichtungen zum Umsetzen der von der Computereinrichtung 12 empfangenen Signale in eine Datenformat, das dem Datenformat entspricht, das von dem Mobilfunkgerät 3 über die Schnittstelle 4 empfangen werden kann. Im Falle üblicher GSM-Handys setzt die Basisstation 1 die empfangenen Signale somit in einen seriellen Datenstrom um, wie er von GSM-Handys über die Schnittstelle 4 standardmäßig empfangen werden kann. Die Basisstation 1 enthält korrespondierende Einrichtungen zum Umsetzen von Daten, die vom Mobilfunkgerät 3 über die Schnittstelle 4 empfangen wurden, in Signale, die über die Antenne 11 an die Computereinrichtung 12 im entsprechenden Funkstandard gesendet werden können.

Das Mobilfunkgerät 3 besitzt standardmäßig bereits Einrichtungen zum Umsetzen der über die Schnittstelle 4 empfangenen Daten in GSM-Signale und besitzt darüberhinaus standardmäßig bereits Einrichtungen zum Umsetzen empfangener GSM-Signale in die entsprechenden seriellen Daten zur Ausgabe über die Datenschnittstelle 4.

Solange sich der Benutzer der Computereinrichtung 12 innerhalb einer DECT-Umgebung befindet, kann er über die eingesteckte PCMCIA-Karte mit Antenne 13 eine breitbandige und qualitativ hochwertige Datenkommunikation mit entsprechenden DECT-Basisstationen aufbauen, wobei die Basisstation 1 selbst eine derartige Basisstation darstellen kann. Für diesen Fall ist die Basisstation 1 vorzugsweise als vollständige DECT-Basisstation ausgerüstet mit der Möglichkeit, über eine Schnittstelle eine Verbindung zum Festnetz aufzubauen. Befindet sich der Benutzer außerhalb seiner üblichen DECT-Umgebung, so kann er dennoch eine Verbindung zwischen seiner Computereinrichtung 12 und der Basisstation 1 im DECT-Standard aufbauen, da die Basisstation 1 selbst eine DECT-Funkzelle zur Verfügung stellt. In diesem Fall werden die entsprechenden Daten jedoch nicht an ein Festnetz oder an eine andere Computereinrichtung von der Basisstation weitergegeben, sondern werden in das erwähnte serielle Datenformat umgesetzt, um über die Schnittstelle 4 des eingesetzten Mobilfunkgeräts in das Mobilfunkgerät eingespeist zu werden. Dort werden diese Daten dann in übliche GSM-Signale umgesetzt und entsprechend abgestrahlt.

Wie eingangs erwähnt, kann während dieses Betriebes die Computereinrichtung 12 als komfortables Bedieninterface für das Mobilfunkgerät 3 ausgelegt sein. Insbesondere können Funktionen wie Telefonregister, Autodialing, SMS-Message-Box, Editor für SMS-Nachrichten etc. durch die Computereinrichtung 12 zur Verfügung gestellt werden.

Ist die Basisstation 3 als Ladestation ausgeführt, so ergibt sich der Vorteil, daß der Benutzer auf Reisen kein zusätzliches Gerät mit sich führen muß. Insbesondere für diesen Fall ist es zweckmäßig, daß die Basisstation in einen Aktenkoffer integriert ist, in dem auch das Mobilfunkgerät üblicherweise mitgetragen wird. Der Benutzer kann somit, beispielsweise in einem Hotel, von seinem Laptop aus eine Datenkommunikation über Zwischenschaltung der im Aktenkoffer integrierten Basisstation 1 über das GSM-Netz oder ein entsprechend anderes Netz aufbauen.

## Patentansprüche

1. Datenkommunikationssystem zur drahtlosen Datenkommunikation gemäß einem Fembereichsfunkstandard, vorzugsweise dem GSM-Standard, wobei das System eine Computereinrichtung (12) und ein standardmäßiges Mobilfunkgerät (3) für den entsprechenden Eembereichsfunkstandard aufweist,
wobei die Computereinrichtung (12) zur Durchführung der Datenkommunikation mit dem Mobilfunkgerät (3) über eine Standard-Datenschnittstelle (4) des Mobilfunkgeräts (3) gekoppelt ist und wobei der Aufbau einer Funkverbindung unter Steuerung der Computereinrichtung (12) erfolgt, **dadurch gekennzeichnet, daß**
die Koppelung zwischen Computereinrichtung (12) und Mobilfunkgerät (3) drahtlos unter Verwendung eines Nahbereichsfunkstandards, vorzugsweise dem DECT-Standard, erfolgt,
wobei eine Basisstation (1) zur Bereitstellung einer Funkzelle gemäß dem Nahbereichsfunkstandard vorgesehen ist und die Computereinrichtung (12) eine Computerkarte, vorzugsweise eine PCMCIA-Karte, aufweist, die die Funkanbindung der Computereinrichtung (12) an die Basisstation (1) gemäß dem Nahbereichsfunkstandard ermöglicht, und
wobei die Basisstation (1) einen Aufnahmebereich (4) mit einer elektrischen DatenSchnittstelle (4) aufweist, an die das Mobilfunkgerät (3) zur Datenkommunikation über seine Standard-Datenschnittstelle (4) durch Einsetzen in den Aufnahmebereich (4)gekoppelt wird und wobei die Basisstation (1) weiterhin Einrichtungen aufweist, durch die ermöglicht wird, daß vom Mobilfunkgerät (3) über die Standard-Datenschnittstelle (4) zur Verfügung gestellte Daten unter Verwendung des Nahbereichsfunkstandards an die Computereinrichtung (12) übertragen werden und femer ermöglicht wird, daß Daten, die von der Computereinrichtung (12) an die Basisstation (1) unter Verwendung des Nahbereichsfunkstandards übertragen werden, von der Basisstation in einen Datentstrom umgesetzt-werden, der über die elektrische Datenschnittstelle (4) bzw. die Standard-Datenschnittstelle (4) dem Mobilfunkgerät (3) zugeführt wird.

2. Datenkommunikationssystem nach Anspruch 1, **dadurch gekennzeichnet, daß** die Standard-Datenschnittstelle (4) eine serielle Schnittstelle ist, wie sie bei GSM-Mobilfunkgerät (3)en standardmäßig vorhanden ist.

3. Datenkommunikationssystem nach Anspruch 1 oder 2, **dadurch gekennzeichnet, daß** der Aufnahmebereich (4) der Basisstation (1) schalenförmig ausgeführt ist und in seinen Abmessungen mit den äußeren Abmessungen des Teils des Mobilfunkgerätes (3) korrespondiert, der beim Einsetzen des Mobilfunkgerätes (3) in die Basisstation (1) von dem Aufnahmebereich (4)aufgenommen wird.

4. Datenkommunikationssystem nach Anspruch 3, **dadurch gekennzeichnet, daß** die elektrische Datenschnittstelle (4) der Basisstation (1) einen Stecker (5) aufweist, der beim Einsetzen des Mobilfunkgerätes (3) in die Basisstation (1) automatisch in eine korrespondierende Steckerbuchse des Mobilfunkgerätes (3) eingreift.

5. Datenkommunikationssystem nach einem der vorhergehenden Ansprüche, **dadurch gekennzeichnet, daß** die Basisstation (1) zusätzlich als Ladestation zum Aufladen des Mobilfunkgerätes (3) ausgelegt ist

6. Datenkommunikationssystem nach Anspruch 5, **dadurch gekennzeichnet, daß** die Basisstation (1) in dem Aufnahmebereich (4) Ladekontakte aufweist, die beim Einsetzen des Mobilfunkgerätes (3) in die Basisstation (1) mit korrespondierenden Ladekontakten des Mobilfunkgerätes (3) koppeln, um ein Aufladen zu ermöglichen.

7. Datenkommunikationssystem nach einem der vorhergehenden Ansprüche, **dadurch gekennzeichnet, daß** die Basisstation (1) Einrichtungen zum Umsetzen der empfangenen Signale gemäß dem Nahbereichsfunkstandard in einen dritten kabelgebundenen Standard, vorzugsweise ISDN-Standard, aufweist, zum Einspeisen der entsprechend umgesetzten Signale in ein Festnetz sowie zum Umsetzen von von einem Festnetz über Kabel empfangenen Signalen gemäß dem dritten Standard, vorzugsweise ISDN-Standard, in Signale gemäß dem Nahbereichsfunkstandard, zur Übertragung an die Computereinrichtung (12).

8. Datenkommunikationssystem nach einem der vorhergehenden Ansprüche, **dadurch gekennzeichnet, daß** die Basisstation (1) eine Betriebsanzeige, insbesondere zum Anzeigen eines aktiven Funkbetriebs, aufweist.

9. Datenkommunikationssystem nach Anspruch 5, **dadurch gekennzeichnet, daß** eine weitere Betriebsanzeige vorgesehen ist, die einen Ladevorgang anzeigt.

10. Basisstation (1) zur Verwendung in einem Datenkommunikationssystem zur drahtlosen Datenkommunikation gemäß einem Fembereichsfunkstandard, vorzugsweise dem GSM-Standard, wobei das System eine Computereinrichtung (12) und ein standardmäßiges Mobilfunkgerät (3) für den entsprechenden Fembereichsfunkstandard aufweist,
wobei die Computereinrichtung (12) zur Durchführung der Datenkommunikation mit dem Mobilfunkgerät (3) über eine Standard-Datenschnittstelle (4) des Mobilfunkgeräts (3) gekoppelt ist und wobei der Aufbau einer Funkverbindung unter Steuerung der Computereinrichtung (12) erfolgt,
wobei die Koppelung zwischen Computereinrichtung (12) und Mobilfunkgerät (3) drahtlos unter Verwendung eines Nahbereichsfunkstandards, vorzugsweise dem DECT-Standard, erfolgt,
wobei eine Basisstation (1) zur Bereitstellung einer Funkzelle gemäß dem Nahbereichsfunkstandard vorgesehen ist und die Computereinrichtung (12) eine Computerkarte, vorzugsweise ein PCMCIA-Karte, aufweist, die die Funkanbindung der Computereinrichtung (12) an die Basisstation (1) gemäß dem Nahbereichsfunkstandard ermöglicht, und
wobei die Basisstation (1) einen Aufhahmebereich (4) mit einer elektrischen Datenschnittstelle (4) aufweist, an die das Mobilfunkgerät (3) zur Datenkommunikation über seine Standard-Datenschnittstelle (4) durch Einsetzen in den Aufnahmebereich (4) gekoppelt wird und wobei die Basisstation (1) weiterhin Einrichtungen aufweist, durch die ermöglicht wird, daß vom Mobilfunkgerät (3) über die Standard-Datenschnittstelle (4) zur Verfügung gestellte Daten unter Verwendung des Nahbereichsfunkstandards an die Computereinrichtung (12) übertragen werden und ferner ermöglicht wird, daß Daten, die von der Computereinrichtung (12) an die Basisstation (1) unter Verwendung des Nahbereichsfunkstandards übertragen werden, von der Basisstation in einen Datentstrom umgesetzt werden, der über die elektrische Datenschnittstelle (4) bzw. die Standard-Datenschnittstelle (4) dem Mobilfunkgerät (3) zugeführt wird.

11. Aktenkoffer mit integrierter Basisstation (1) zur Verwendung in einem Datenkommunikationssystem zur drahtlosen Datenkommunikation gemäß einem Fernbereichsfunkstandard, vorzugsweise dem GSM-Standard, wobei das System eine Computereinrichtung (12) und ein standardmäßiges Mobilfunkgerät (3) für den entsprechenden Fembereichsfunkstandard aufweist,
wobei die Computereinrichfung (12) zur Durchführung der Datenkommunikation mit dem Mobilfunkgerät (3) über eine Standard-Datenschnittstelle (4) des Mobilfunkgeräts (3) gekoppelt ist und wobei der Aufbau einer Funkverbindung unter Steuerung der Computereinrichtung (12) erfolgt,
wobei die Koppelung zwischen Computereinrichtung (12) und Mobilfunkgerät (3) drahtlos unter Verwendung eines Nahbereichsfunkstandards, vorzugsweise dem DECT-Standard, erfolgt,
wobei eine Basisstation (1) zur Bereitstellung einer Funkzelle gemäß dem Nahbereichsfunkstandard vorgesehen ist und die Computereinrichtung (12) eine Computerkarte, vorzugsweise eine PCMCIA-Karte, aufweist, die die Funkanbindung der Computereinrichtung (12) an die Basisstation (1) gemäß dem Nahbereichsfunkstandard ermöglicht, und
wobei die Basisstation (1) einen Aufnahmebereich (4) mit einer elektrischen Datenschnittstelle (4) aufweist, an die das Mobilfunkgerät (3) zur Datenkommunikation über seine Standard-Datenschnittstelle (4) durch Einsetzen in den Aufnahmebereich (4) gekoppelt wird und wobei die Basisstation (1) weiterhin Einrichtungen aufweist, durch die ermöglicht wird, daß vom Mobilfunkgerät (3) über die Standard-Datenschnittstelle (4) zur Verfügung gestellte Daten unter Verwendung des Nahbereichsfunkstandards an die Computereinrichtung (12) übertragen werden und ferner ermöglicht wird, daß Daten, die von der Computereinrichtung (12) an die Basisstation (1) unter Verwendung des Nahbereichsfunkstandards übertragen werden, von der Basisstation in einen Datentstrom umgesetzt werden, der über die elektrische Datenschnittstelle (4) bzw. die Standard-Datenschnittstelle (4) dem Mobilfunkgerät (3) zugeführt wird.

## Claims

1. Data communication system for wireless data communication in accordance with a far-range radio standard, preferably the GSM standard wherein the system comprises a computer device (12) and a standard mobile radio device (3) suitable for the respective far- range radio standard,
wherein the computer device (12) is coupled to the mobile radio device (3) by means of a standard interface (4) of the mobile radio device (3) for performing the data communication and wherein the establishment of a radio link is made under control of the computer device (12)
**characterized in that**
the coupling between the computer device (12) and the mobile radio device (3) is made wireless by means of a short-range radio standard preferably the DECT standard, wherein a base station (1) is used for providing a radio cell according to the short-range radio standard and wherein the computer device (12) comprises a computer card, preferably a PCMCIA card, which enables the radio link between the computer device (12) and the base station (1) in accordance with the short-range radio standard, and
wherein the base station (1) comprises a locating area (4) having an electrical data interface (4) to which the mobile radio device (3) is coupled for data communication via its standard data interface (4) by inserting it into the locating area and wherein the base station further provides means enabling that data provided by the mobile radio device (3) via its standard data interface are transmitted using the short-range radio standard and further enabling that data which are transmitted by the computer device (12) to the base station (1) using the short-range radio standard are converted by the base station in a data stream, which is forwarded via the electrical data interface (4) respectively the standard data interface (4) to the mobile radio device.

2. Data communication system according to claim 1 **characterizing in that** the standard data interface (4) is a serial interface, as is provided in GSM mobile radio devices as standard.

3. Data communication system according to claim 1 or 2 **characterized in that** the locating area of the base station (1) is shell-shaped and corresponds in respect to the outer dimensions of the part of the mobile radio device accommodated the locating area when the mobile radio device is inserted in the base station.

4. Data communication system according to claim 3, wherein the electrical data interface (4) of the base station (1) comprises a plug (5) automatically engaging with the corresponding plug circuit of the mobile radio device (3) when the mobile radio device (3) is inserted into the base station.

5. Data communication system according to one of the preceding claims **characterized in that** the base station (1) is additionally designed as charging station for charging the mobile radio device (3).

6. Data communication according to claim 5, **characterized in that** the base station comprises charging contacts in the locating area contacting in corresponding contacts of the mobile radio device (3) when the mobile radio device is inserted into the base station (1) so as to allow charging.

7. Data communication system according to one of the preceding claims, **characterized in that** the base station (1) comprises means for converting the signals received in accordance with the short-range radio standard into a third wired standard, for feeding the correspondingly converted signals into a fixed network as well as for converting signals received via cable from a fixed network according to the third standard, preferably the ISDN standard into signals according to the short-range radio standard, for transmission to the computer device (8).

8. Data communication system according to one of the preceding claims **characterized in that** the base station (1) comprises an operation display, for displaying an active radio operation.

9. Data communication system according to claim 5 **characterized by** an additional operation display displaying a charging process.

10. Base station for use in a data communication system for wireless data communication in accordance with a far-range radio standard, preferably GSM standard, wherein the system comprises a computer device (12) and a standard mobile radio device (3) suitable for the respective far- range radio standard,
wherein the computer device (12) is coupled to the mobile radio device (3) by means of a standard interface (4) of the mobile radio device (3) for performing the data communication and wherein the establishment of a radio link is made under control of the computer device (12)
**characterized in that**
the coupling between the computer device (12) and the mobile radio device (3) is made wireless by means of a short-range radio standard preferably the DECT standard, wherein a base station (1) is used for providing a radio cell according to the short-range radio standard and wherein the computer device (12) comprises a computer card, preferably a PCMCIA card which enables the radio link between the computer device (12) and the base station (1) in accordance with the short-range radio standard, and
wherein the base station (1) comprises a locating area (4) having an electrical data interface (4) to which the mobile radio device (3) is coupled for data communication via its standard data interface (4) by inserting it into the locating area and wherein the base station further provides means enabling that data provided by the mobile radio device (3) via its standard data interface are transmitted using the short-range radio standard and further enabling that data which are transmitted by the computer device (12) to the base station (1) using the short-range radio standard are converted by the base station in a data stream, which is forwarded via the electrical data interface (4), respectively the standard data interface (4) to the mobile radio device.

11. Briefcase having an integrated base station for use in a data communication system for wireless data communication in accordance with a far-range radio standard, preferably GSM standard, wherein the system comprises a computer device (12) and a standard mobile radio device (3) suitable for the respective far- range radio standard,
wherein the computer device (12) is coupled to the mobile radio device (3) by means of a standard interface (4) of the mobile radio device (3) for performing the data communication and wherein the establishment of a radio link is made under control of the computer device (12)
**characterized in that**
the coupling between the computer device (12) and the mobile radio device (3) is made wireless by means of a short-range radio standard preferably the DECT standard, wherein a base station (1) is used for providing a radio cell according to the short-range radio standard and wherein the computer device (12) comprises a computer card, preferably a PCMCIA card which enables the radio link between the computer device (12) and the base station (1) in accordance with the short-range radio standard, and
wherein the base station (1) comprises a locating area (4) having an electrical data interface (4) to which the mobile radio device (3) is coupled for data communication via its standard data interface (4) by inserting it into the locating area and wherein the base station further provides means enabling that data provided by the mobile radio device (3) via its standard data interface are transmitted using the short-range radio standard and further enabling that data which are transmitted by the computer device (12) to the base station (1) using the short-range radio standard are converted by the base station in a data stream, which is forwarded via the electrical data interface (4), respectively the standard data interface (4) to the mobile radio device.

## Revendications

1. Système de communication de données pour la communication sans fil de données suivant une norme radio pour longues distances, de préférence la norme GSM, le système comprenant un dispositif informatique (12) et un appareil de radiotéléphonie mobile (3) normalisé pour la norme radio pour longues distances correspondante,
le dispositif informatique (12), pour l'exécution de la communication de données, étant couplé à l'appareil de radiotéléphonie mobile (3) via une interface de données normalisée (4) de l'appareil de radiotéléphonie mobile (3) et l'établissement d'une liaison radio s'effectuant sous le contrôle du dispositif informatique (12),
**caractérisé en ce que**
le couplage entre le dispositif informatique (12) et l'appareil de radiotéléphonie mobile (3) s'effectue sans fil, en utilisant une norme radio pour courtes distances, de préférence la norme DECT,
une station de base (1), fournissant une cellule radio suivant la norme radio pour courtes distances, étant prévue et le dispositif informatique (12) comportant une carte informatique, de préférence une carte PCMCIA, qui permet la connexion radio du dispositif informatique (12) à la station de base (1) suivant la norme radio pour courtes distances, et
la station de base (1) comportant un logement (2) avec une interface de données (4) électrique à laquelle l'appareil de radiotéléphonie mobile (3) est couplé lorsqu'il est inséré dans le logement (2), pour la communication de données via son interface de données normalisée (4), et la station de base (1) comportant en outre des dispositifs qui permettent que des données fournies par l'appareil de radiotéléphonie mobile (3) via l'interface de données normalisée (4) soient transmises au dispositif informatique (12) en utilisant la norme radio pour courtes distances, et qui permettent de plus que des données, qui sont transmises par le dispositif informatique (12) à la station de base (1) en utilisant la norme radio pour courtes distances, soient converties par la station de base en un flux de données qui est transmis à l'appareil de radiotéléphonie mobile (3) par l'intermédiaire de l'interface de données (4) électrique, respectivement l'interface de données normalisée (4).

2. Système de communication de données selon la revendication 1, **caractérisé en ce que** l'interface de données normalisée (4) est une interface série telle qu'elle est prévue dans les appareils de radiotéléphonie mobile (3) GSM normalisés.

3. Système de communication de données selon la revendication 1 ou 2, **caractérisé en ce que** le logement (2) de la station de base (1) a une forme de coque dont les dimensions correspondent aux dimensions extérieures de la partie de l'appareil de radiotéléphonie mobile (3) qui vient se placer dans le logement (2) lorsque l'appareil de radiotéléphonie mobile (3) est inséré dans la station de base (1).

4. Système de communication de données selon la revendication 3, **caractérisé en ce que** l'interface de données (4) électrique de la station de base (1) comporte un connecteur (5) qui, lors de l'insertion de l'appareil de radiotéléphonie mobile (3) dans la station de base (1), s'engage automatiquement dans une prise femelle correspondante de l'appareil de radiotéléphonie mobile (3).

5. Système de communication de données selon une des revendications précédentes, **caractérisé en ce que** la station de base (1) est conçue de plus comme station de recharge pour recharger l'appareil de radiotéléphonie mobile (3).

6. Système de communication de données selon la revendication 5, **caractérisé en ce que** la station de base (1) comporte dans le logement (2) des contacts de charge qui, lorsque l'appareil de radiotéléphonie mobile (3) est inséré dans la station de base (1), se couplent à des contacts de charge correspondants de l'appareil de radiotéléphonie mobile (3), pour permettre une recharge.

7. Système de communication de données selon une des revendications précédentes, **caractérisé en ce que** la station de base (1) comporte des dispositifs pour convertir les signaux reçus suivant la norme radio pour courtes distances en une troisième norme de radiocommunication câblée, de préférence la norme RNIS (ISDN), afin d'envoyer les signaux convertis dans un réseau du service fixe et de convertir des signaux reçus d'un réseau du service fixe par des câbles suivant la troisième norme, de préférence la norme RNIS, en signaux suivant la norme radio pour courtes distances, aux fins de les transmettre au dispositif informatique (12).

8. Système de communication de données selon une des revendications précédentes, **caractérisé en ce que** la station de base (1) comporte un témoin de fonctionnement, en particulier pour signaler un état actif de fonctionnement radio.

9. Système de communication de données selon la revendication 5, **caractérisé en ce qu'**il est prévu un autre témoin de fonctionnement qui signale un processus de recharge.

10. Station de base (1) destinée à être utilisée dans un système de communication de données pour la communication sans fil de données suivant une norme radio pour longues distances, de préférence la norme GSM, le système comprenant un dispositif informatique (12) et un appareil de radiotéléphonie mobile (3) normalisé pour la norme radio pour longues distances correspondante,
le dispositif informatique (12), pour l'exécution de la communication de données, étant couplé à l'appareil de radiotéléphonie mobile (3) via une interface de données normalisée (4) de l'appareil de radiotéléphonie mobile (3) et l'établissement d'une liaison radio s'effectuant sous le contrôle du dispositif informatique (12), le couplage entre le dispositif informatique (12) et l'appareil de radiotéléphonie mobile (3) s'effectuant sans fil, en utilisant une norme radio pour courtes distances, de préférence la norme DECT,
une station de base (1), fournissant une cellule radio suivant la norme radio pour courtes distances, étant prévue et le dispositif informatique (12) comportant une carte informatique, de préférence une carte PCMCIA, qui permet la connexion radio du dispositif informatique (12) à la station de base (1) suivant la norme radio pour courtes distances, et
la station de base (1) comportant un logement (2) avec une interface de données (4) électrique à laquelle l'appareil de radiotéléphonie mobile (3) est couplé lorsqu'il est inséré dans le logement (2), pour la communication de données via son interface de données normalisée (4), et la station de base (1) comportant en outre des dispositifs qui permettent que des données fournies par l'appareil de radiotéléphonie mobile (3) via l'interface de données normalisée (4) soient transmises au dispositif informatique (12) en utilisant la norme radio pour courtes distances, et qui permettent de plus que des données, qui sont transmises par le dispositif informatique (12) à la station de base (1) en utilisant la norme radio pour courtes distances, soient converties par la station de base en un flux de données qui est transmis à l'appareil de radiotéléphonie mobile (3) par l'intermédiaire de l'interface de données (4) électrique, respectivement l'interface de données normalisée (4).

11. Porte-document dans lequel est intégrée une station de base (1) destinée à être utilisée dans un système de communication de données pour la communication sans fil de données suivant une norme radio pour longues distances, de préférence la norme GSM, le système comprenant un dispositif informatique (12) et un appareil de radiotéléphonie mobile (3) normalisé pour la norme radio pour longues distances correspondante, le dispositif informatique (12), pour l'exécution de la communication de données, étant couplé à l'appareil de radiotéléphonie mobile (3) via une interface de données normalisée (4) de l'appareil de radiotéléphonie mobile (3) et l'établissement d'une liaison radio s'effectuant sous le contrôle du dispositif informatique (12), le couplage entre le dispositif informatique (12) et l'appareil de radiotéléphonie mobile (3) s'effectuant sans fil, en utilisant une norme radio pour courtes distances, de préférence la norme DECT,
une station de base (1), fournissant une cellule radio suivant la norme radio pour courtes distances, étant prévue, et le dispositif informatique (12) comportant une carte informatique, de préférence une carte PCMCIA, qui permet la connexion radio du dispositif informatique (12) à la station de base (1) suivant la norme radio pour courtes distances, et
la station de base (1) comportant un logement (2) avec une interface de données (4) électrique à laquelle l'appareil de radiotéléphonie mobile (3) est couplé lorsqu'il est inséré dans le logement (2), pour la communication de données via son interface de données normalisée (4), et la station de base (1) comportant en outre des dispositifs qui permettent que des données fournies par l'appareil de radiotéléphonie mobile (3) via l'interface de données normalisée (4) soient transmises au dispositif informatique (12) en utilisant la norme radio pour courtes distances, et qui permettent de plus que des données, qui sont transmises du dispositif informatique (12) à la station de base (1) en utilisant la norme radio pour courtes distances, soient converties par la station de base en un flux de données qui est transmis à l'appareil de radiotéléphonie mobile (3) par l'intermédiaire de l'interface de données (4) électrique, respectivement l'interface de données normalisée (4).
